# EUROPÄISCHE PATENTSCHRIFT

(11) **EP 0 743 227 B1**
(45) Veröffentlichungstag und Bekanntmachung des Hinweises auf die Patenterteilung: **10.12.1997**
(21) Anmeldenummer: 96105892.2
(22) Anmeldetag: 15.04.1996
(51) Int. Cl.: B60R 5/00

(54) **Staukasten zur Aufbewahrung und zum Transport von Gegenständen**
Case for storing and transporting items
Caisse pour le rangement et le transport d'objets

(30) Priorität: 19.05.1995 DE 29508382 U
(43) Veröffentlichungstag der Anmeldung: 20.11.1996
(73) Patentinhaber: ZEPPELIN MOBILE SYSTEME GmbH, D-77656 Offenburg (DE)
(72) Erfinder: Eisele, Dietmar, 77656 Offenburg (DE)
(74) Vertreter: Kern, Wolfgang, Dipl.-Ing.

(56) Entgegenhaltungen:
- EP-A- 0 514 957
- DE-A- 2 120 559
- US-A- 1 927 735

## Beschreibung

Die Erfindung betrifft einen Staukasten zur Aufbewahrung und zum Transport von Gegenständen in Fahrzeugen wie Reisemobilen gemäß dem Oberbegriff des Anspruchs 1.

In Reisemobilen, Caravans, Campingfahrzeugen u. dgl., aber auch in Reisebussen und sogar in Flugzeugen müssen Möglichkeiten bestehen, auf der Reise mitgeführte Gegenstände zu verstauen. Staukästen der genannten Art sollen nicht nur stabil sein, so daß sie unter dem Gewicht der in ihnen aufzubewahrenden Gegenstände, beispielsweise Kleidungsstücke, Schuhe u. dgl., sowohl im Fahrzeug selbst als auch beim Lösen aus ihrer Befestigungslage und Wegtragen von Hand sich nicht zu stark verformen und möglicherweise zerbrechen, sondern sie sollen auch leicht genug sein, um das Wegtragen insbesondere für ältere Personen, die heuzutage in Reisemobilden unterwegs sind, nicht zu sehr zu erschweren. Dabei ist selbstverständlich zu fordern, daß ein mit Gegenständen gefüllter Staukasten der unter dem Fahrzeugdach hängt, aus Gewichts- bzw. Festigkeitsgründen nicht erst ausgeräumt werden muß, bevor er aus dieser Lage entfernt und zusammen mit den Gegenständen wie ein Koffer weggetragen werden kann.

Diese Bedingungen erfüllt der Staukasten gemäß US-A-1 927 735 nur unzureichend, weil er einerseits so groß ausgebildet ist, daß er sich über die ganze Dachbreite des Fahrzeuges erstreckt und deshalb nur durch Verschwenken seines Bodens bzw. seines gesamten Gehäuses zugänglich ist und aus einer Transportposition entfernt werden kann, andererseits auf Geund seiner Größe auch nicht leichtgewichtig gebaut werden kann, ohne daß sich seine Wände unter dem Gewicht eines Inhalts verformen. Darüber hinaus weist dieser bekannte Staukasten keinerlei Mittel auf, mit denen sichergestellt ist, daß auch kleinere Gegenstände oder Kleidungsstücke während und nach dem Transport im wesentlichen auf ihrem Platz bleiben und nicht durcheinanderfliegen.

Die Aufgabe der Erfindung besteht deshalb darin, den bekannten Staukasten so werterzubilden, daß die obengenannten Nachteile nicht auftreten und insbesondere bei einem geringeren Leergewicht eine ausreichende Stabilität auch dann sichergestellt ist, wenn der Staukasten voll gefüllt ist und während des Transports durch Stöße, wie sie auf schlechten Straßen und mit unzureichend gefederten Fahrzeugen auftreten, beansprucht wird.

Diese Aufgabe wird mit den kennzeichnenden Merkmalen des Anspruchs 1 gelöst.

Durch diese Konstruktion wird dem Benutzer die Möglichkeit geboten, den Staukasten zu Hause in seiner Wohnung mit den gewünschten Reiseutensilien so zu füllen, daß diese die gewünschte Ordnung auch beim Tragen und späteren Transport zum Fahrzeug beibehalten, da die Fachböden den Stauraum zweckmäßig unterteilen. Gleichzeitig wird durch die Sicken in den Staukastenwänden auch bei vergleichsweise dünnen Wandstärken eine ausreichende Formbeständigkeit und Festigkeit erreicht, wobei durch die Tatsache, daß die Sicken auch als Auflage und Führung für die Fachböden dienen, eine weitere Wandversteifung des Kastens erzielt wird, ohne daß diese das Gesamtgewicht des Staukastens wesentlich vergrößern.

In Weiterentwicklung dieses Vorschlags könnte bei Einhaltung besonderer Sicherheits- und Einbau- bzw. Dimensionierungsvorschiften ein solcher Staukasten auch dazu dienen, in Flugzeugen an Stelle der heutzutage üblichen fest installierten Staukästen über den Fluggastsitzen verwendet zu werden, also vom Fluggast mit in die Kabine genommen zu werden, um im Bereich des Kabinendaches mit Hilfe besonderer Verankerungselemente befestigt zu werden.

Zur schnell lösbaren Befestigung des Staukastens in einem Fahrzeug können an sich bekannte Verbindungseinrichtungen, sogenannte Quick-Outs, vorgesehen werden.

Damit der Staukasten bequem wie ein Koffer mit einer Hand getragen werden kann, ist zweckmäßigerweise an seinem oberen Rand eine Tragmulde als Handgriff ausgebildet.

Dadurch, daß Grundkörper und Klappe des Staukastens als Kunststoff-Tiefziehteile herstellbar sind, kann die Herstellung mit relativ geringem Kostenaufwand erfolgen.

Die Erfindung wird nachfolgend anhand des in der Zeichnung dargestellten Ausführungsbeispiels näher erläutert. In der Zeichnung zeigen:
- Fig. 1: eine perspektivische Ansicht des Staukastens in Form eines Dachstaukastens, der in einem Fahrzeug hängend befestigt ist,
- Fig. 2: eine perspektivische Ansicht des Staukastens von Fig. 1, verwendet als Transportbox wobei der Staukasten auf einem Boden steht und
- Fig. 3: eine gegenüber den Fig. 1 und 2 verkleinerte Darstellung des Staukastens, die zeigt, wie er wie ein Koffer getragen werden kann.

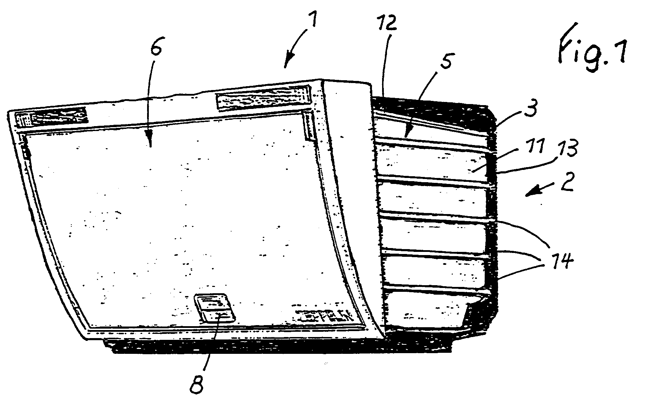

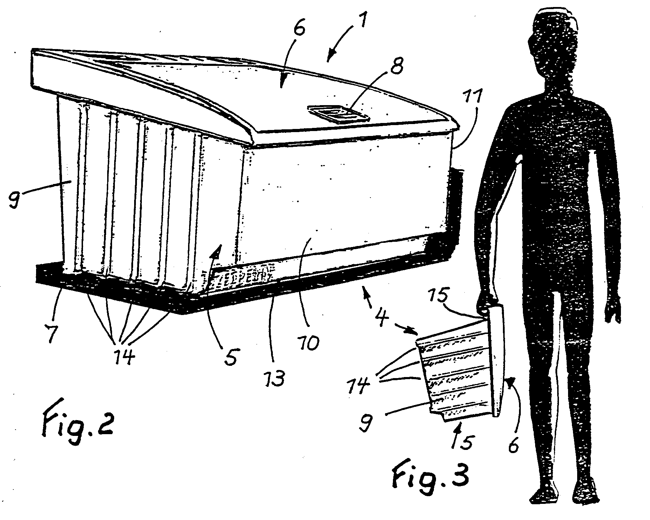

Der in den Fig. 1 und 2 gezeigte Staukasten 1 besteht aus einem gehäuseförmigen Grundkörper 5, der vier in etwa rechtwinklig aufeinanderstoßende Seitenwände 9, 10, 11, 12 aufweist, von denen die beiden gegenüberliegenden Wände 9, 11 mit Sicken 14 versehen sind, sowie einen mit den Seitenwänden verbundenen Boden 13 und des weiteren aus einer Klappe 6 als Gehäusedeckel.

Grundkörper und Klappe bilden Kunststoff-Tiefziehteile. In diesem Ausführungsbeispiel hat der Staukasten eine Größe (Länge x Höhe x Tiefe) von 550 x 400 x 350 mm. Die Klappe 6 ist an dem Grundkörper mittels einer nicht dargestellten Scharniereinrichtung verschwenkbar befestigt, so daß der Innenraum des Grundkörpers mit Hilfe der Klappe verschlossen werden kann. Hierzu weist die Klappe auch ein Verschlußelement 8 auf, das in Form eines Schlosses oder Riegels das Innere des Staukastens, falls gewünscht, diebstahlsicher macht.

Die in den Seitenwänden 9, 11 vorgesehenen Sicken 14 sind mit Abstand parallel zueinander und senkrecht zum Boden 13 angeordnet und dienen nicht nur zur Versteifung der Seitenwände sondern auch zur Aufteilung des Innenraums des Staukastens dadurch, daß in sie Fachböden eingeschoben werden können. Auf diese Weise können in den Fällen, in denen, wie in Fig. 1 dargestellt, der Staukasten 1 als Dachstaukasten dient, also in einem Fahrzeug, insbesondere Reisemobil, unter dem Dach hängend an der Wand 3 des Reisemobils befestigt ist, die nicht dargestellten Fachböden Reiseutensilien aufnehmen und damit dem Staukasten die Funktion eines Hängeschrankes, wie er beispielsweise bei Kücheneinrichtungen Verwendung findet, verleihen.

Nach seiner Entfernung aus der in Fig. 1 dargestellten Befestigungslage, die mit dem Bezugszeichen 2 befestigt ist, läßt sich der Staukasten als bewegliche Transportbox benutzen und beispielsweise wie ein Koffer 4 auf einem Boden 7 absetzen oder von einer Person wegtragen, wie in den Fig. 2 und 3 dargestellt ist.

Um einen raschen Wechsel der Verwendungsmöglichkeit für den Staukasten sicherzustellen, kann dieser mit einer lösbaren Verbindungseinrichtung, einer sogenannten "Quick-Out" versehen werden, durch die er als Dachstaukasten in der in Fig. 1 gezeigten Lage befestigbar, jedoch aus dieser Lage auch wieder schnell entfernbar ist, wobei er an seinem oberen Rand 15, der Bestandteil der Klappe 6 ist, mit einer Tragmulde als Handgriff versehen ist.

Durch diese Staukastenkonstruktion wird erreicht, daß der Staukasten auch außerhalb des Fahrzeugs benutzt werden kann, so daß er auch außerhalb mit den Reiseutensilien gefüllt und wie ein Koffer weggetragen werden kann. Andere Verwendungszwecke, beispielsweise als Box zum Einkaufen oder als Strandkoffer, sind denkbar.

## Patentansprüche

1. Staukasten zur Aufbewahrung und zum Transport von Gegenständen in Fahrzeugen wie Reisemobilen, der stationär unter dem Fahrzeugdach hängend befestigbar ist und nach seiner Entfernung aus der Befestigungslage als bewegliche Transportbox nutzbar und wie ein Koffer tragbar ist und mit einen gehäuseförmigen Grundkörper versehen ist, der vier in etwa rechtwinklig aufeinanderstoßende Serienwände und einen mit den Seitenwänden verbundenen Boden aufweist und eine mittels einer Scharniereinrichtung an dem Grundkörper verschwenkbar befestigte Kappe als Gehäusedeckel, und der mit einem Verschlußelement zum Verschließen des Innenraums des Staukastens versehen ist, **dadurch gekennzeichnet, daß** wenigstens zwei gegenüberliegende Seitenwände (9, 11) mit Sicken (14) versehen sind, die sich mit Abstand parallel zueinander und secrecht zum Boden (13) erstrecken und so ausgebildet sind, daß zur Unterteilung des Innenraums des Staukastens (1) in die Sicken Fachböden einschiebbar sind.

2. Staukasten nach Anspruch 1, **dadurch gekennzeichnet, daß** er zur Befestigung in einem Fahrzeug mit wenigstens einer schnell lösbaren Verbindungseinrichtung versehen ist.

3. Staukasten nach Anspruch 1 oder 2, **dadurch gekennzeichnet, daß** er zur Verwendung als Koffer (4) an seinem oberen Rand (15) mit einer Tragmulde als Handgriff versehen ist.

4. Staukasten nach Anspruch 3, **dadurch gekennzeichnet, daß** der obere Rand Bestandteil der Kappe (6) ist.

5. Staukasten nach einem der Ansprüche 1 bis 4, **dadurch gekennzeichnet, daß** der Grundkörper (5) und die Kappe (6) des Staukastens als Kunststoff-Tiefziehteil hergestellt sind.

## Claims

1. Storage box for keeping and transporting of objects in vehicles, for instance traveling vehicles, in which the storage box is attached to the roof of the vehicle suspending thereon and can be used as a movable transport box after its removing from that fixing position so that it can be carried as a suit case, which storage box is provided with a casing-like basic body having four side walls abutting rectangularly to one another and having a bottom connected to these side walls as well as a hutch as housing cover being pivotally connected to the basic body by hinge means, which storage box is provided with a locking element in order to shut up the enterior of the storage box, characterized in that at least two side walls (9, 11) opposite to one another are provided with ribs (14) extending distantly and parallel to one another and vertically to the bottom (13), which side walls are configurated such that for subdividing the enterior of the storage box (1) partitition walls may be moved into the ribs.

2. Storage box according to claim 1, characterized in that the storage box is provided with at least a quickly releasable connecting equipment by which it will be attached within the vehicle.

3. Storage box according to claim 1 or 2, characterized in that in case the storage box will be used as a suit case (4) it is provided on its upper edge (15) with a handle-like carrying recess.

4. Storage box according to claim 3, characterized in that the upper edge is a part of the hutch (6).

5. Storage box according to one of the claims 1 - 4, characterized in that the basic body (5) and the hutch (6) of the storage box form press-shaped parts of plastic material.

## Revendications

1. Caisse pour le rangement et le transport d'objets dans des véhicules tels que des camping-cars qui peut être suspendue fixe sous le toit du véhicule et qui peut être utilisée, après avoir été retirée de sa position de fixation, comme caisse de transport et peut être portée comme un coffre et comprend un corps de base en forme de boîtier qui présente quatre parois latérales qui sont disposées bout à bout sensiblement perpendiculairement et un fond relié aux parois latérales et un abattant servant de couvercle de boîtier fixé pivotant sur le corps de base par l'intermédiaire d'un système de charnière et qui est pourvue d'un élément de verrouillage pour enfermer le volume intérieur de la caisse, caractérisé en ce qu'au moins deux parois se faisant face (9, 11) sont pourvues de moulures (14) qui s'étendent avec des espacements parallèlement les unes aux autres et perpendiculairement au fond (13) et sont configurées de façon que des tablettes puissent être introduites par coulissement dans les moulures pour le compartimentage du volume intérieur de la caisse (1).

2. Caisse selon la revendication 1, caractérisée en ce qu'elle est pourvue d'au moins un système de fixation à libération rapide pour sa fixation dans un véhicule.

3. Caisse selon la revendication 1 ou 2, caractérisé en ce qu'elle est pourvue à son bord supérieur (15) d'un creux de support servant de poignée pour son utilisation comme coffre (4).

4. Caisse selon la revendication 3, caractérisée en ce que le bord supérieur fait partie de l'abattant (6).

5. Caisse selon l'une quelconque des revendications 1 à 4, caractérisée en ce que le corps de base (5) et l'abattant (6) de la caisse sont fabriqués en matière synthétique emboutie.
